(19) Europäisches Patentamt
European Patent Office
Office européen des brevets

(11) EP 3 389 171 A1

(12) EUROPEAN PATENT APPLICATION
published in accordance with Art. 153(4) EPC

(43) Date of publication:
17.10.2018 Bulletin 2018/42

(51) Int Cl.:
H02K 35/02 (2006.01)          H02K 35/04 (2006.01)
H02N 1/00 (2006.01)           H02N 2/18 (2006.01)

(21) Application number: 16872812.9

(22) Date of filing: 21.11.2016

(86) International application number:
PCT/JP2016/084508

(87) International publication number:
WO 2017/098912 (15.06.2017 Gazette 2017/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 09.12.2015 JP 2015240555

(71) Applicant: Bridgestone Corporation
Tokyo 104-8340 (JP)

(72) Inventors:
• NAGAYA Go
Tokyo 104-8340 (JP)
• WAKAO Yasumichi
Tokyo 104-8340 (JP)

(74) Representative: Oxley, Robin John George
Marks & Clerk LLP
90 Long Acre
London WC2E 9RA (GB)

(54) POWER GENERATING DEVICE AND TIRE

(57) A power generating device capable of improving efficiency of power generation by rotation of a tire and a tire equipped with the power generating device are provided. The power generating device, which is to be mounted on an interior surface of the tire, includes an oscillator that oscillates by rotation of the tire during vehicular travel to produce electromotive force. A resonance frequency of the oscillator is matched to a frequency corresponding to a change in acceleration at the interior surface of the tire during one revolution of the tire rotating at a constant speed.

FIG.1

**Description**

BACKGROUND OF THE INVENTION

1. Field of the Invention

The present invention relates to a power generating device and a tire, and more specifically to a power generating device capable of improving power generation efficiency using tire rotation and a tire equipped with such a power generating device.

2. Description of the Related Art

It has been known that there is a power generating device provided within a tire together with devices for detecting usage environment, such as pressure and temperature, inside an air chamber of the tire. Disclosed in Patent Document 1 is a power generating device for generating power by producing induced electromotive force in a conductive coil by oscillating a magnet supported by a primary spring using impact force the tire receives when a tire surface comes in contact with a road surface.

Also, this power generating device is provided with a secondary spring which supports the magnet elastically when it is shifted outward in a tire radial direction by centrifugal force from a neutral position of the magnet supported by the primary spring when the rotation speed of the tire is fast. In this arrangement, the power generation efficiency can be improved as the magnet is oscillated mainly by the elasticity of the primary spring when the tire rotation speed is slow and mainly by the elasticity of the secondary spring when the tire rotation speed is fast.

RELATED ART DOCUMENT

Patent Document

Patent Document 1: Japanese Unexamined Patent Application Publication No. 2015-47003

SUMMARY OF THE INVENTION

Problem to be Solved by the Invention

However, the power generating device as disclosed in Patent Document 1 has a problem that amounts of generated power at different speeds are low although it is possible to generate power by the oscillation of the magnet irrespective of rotation speeds of the tire. That is, the elastic force of the secondary spring as disclosed in Patent Document 1 is so designed as to go into action on the side in the radial direction outside of the neutral position of the magnet. As a result, the side in the radial direction inside of the neutral position will be in the oscillation range of the magnet only when the rotation speed is slow, and the side in the radial direction outside will be in the oscillation range of the magnet only when the rotation speed is fast. The problem with the power generating device as disclosed in Patent Document 1 is therefore that the oscillation range of the magnet is reduced to a half of the setup without the secondary spring. And consequently the amount of power generation declines when the rotation speed is low or high.

The present invention has been made in view of the foregoing problems, and the objective is to provide a power generating device capable of improving efficiency of the power generation using tire rotation and a tire equipped with such a power generating device.

Means for Solving the Problem

As a power generating device to solve the above-described problems, there is provided a power generating device which is to be mounted on an interior surface of a tire and which includes an oscillator that oscillates by rotation of the tire during vehicular travel to produce electromotive force, in which a resonance frequency of the oscillator is matched to a frequency corresponding to a change in acceleration at an interior surface of the tire during one revolution of the tire rotating at a constant speed.

This arrangement can improve the power generation efficiency. That is, the oscillator is resonated by matching the resonance frequency of the oscillator to the frequency corresponding to the change in acceleration at the interior surface of the tire during one revolution of the tire rotating at a constant speed. And the electromotive force increased by making the amplitude of the oscillator greater will improve the power generation efficiency.

Also, a tire equipped with the above-described power generating device can improve the power generation efficiency and achieve an amount of power generation greater than that of the known art.

BRIEF DESCRIPTION OF THE DRAWINGS

FIG. 1 illustrates a power generating device mounted on a tire.
FIG. 2 is a block diagram showing a constitution of the power generating device.
FIG. 3 shows a structure of the power generating device.
FIG. 4 illustrates a magnetic circuit formed by magnets.
FIG. 5 is illustrations showing states of oscillation of a movable unit when the amount of power generation is the greatest.
FIG. 6 is a time series variation waveform chart showing changes in acceleration in the tire radial direction occurring on the tire inner peripheral surface.

FIG. 7 is a chart showing changes in centrifugal force at the leading end and the trailing end of ground contact.

FIG. 8 is illustrations showing the mechanism of power generation according to a preferred embodiment.

FIG. 9 is a diagram showing a change in generated voltage when the movable unit is oscillating in resonance.

FIG. 10 illustrates another implementation example of the power generating device.

FIG. 11 is illustrations showing the mechanism of power generation according to another implementation example.

Hereinafter, the invention will be described based on preferred embodiments which do not intend to limit the scope of the claims of the present invention. Not all of the combinations of the features described in the embodiments are necessarily essential to the solutions proposed by the invention. The embodiments therefore must be construed to include selectively employed features as well.

MODE FOR CARRYING OUT THE INVENTION

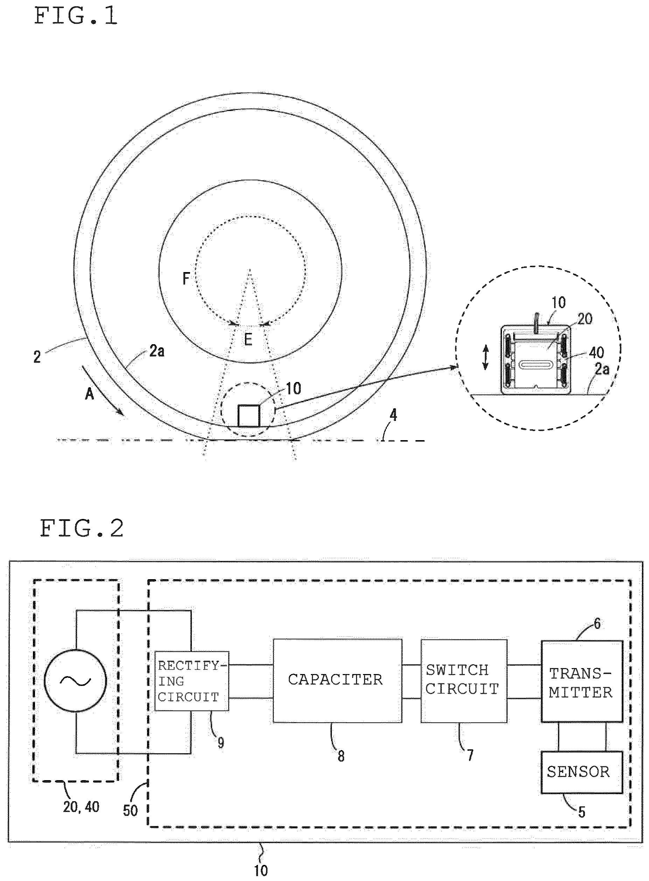

FIG. 1 is an illustration showing an outline of a power generating device mounted within a tire. FIG. 2 is a block diagram showing a constitution of the power generating device. As shown in FIG. 1, a power generating device 10 is mounted on an inner peripheral surface 2a (tire interior surface) of a tire 2 of a vehicle, aircraft, or the like. As the tire 2 rotates in the direction indicated by the arrow A in the illustration, the power generating device 10 generates electric power by producing electromotive force with an oscillator oscillating along with the tire 2 repeating its revolution from a ground contact interval E, where the tire 2 is in contact with a road surface 4, to a non-ground-contact interval F.

As shown in FIG. 2, the power generating device 10 is structured integrally together with a rectifying circuit 9 for rectifying the current occurring in a conductive coil 22, a capacitor 8 for storing the rectified current, a switch circuit 7 for controlling an output of power stored in the capacitor 8, a sensor 5 for detecting usage environment of the tire 2, such as pressure or temperature of air in an air chamber, and a transmission circuit 6 for transmitting values detected by the sensor 5, for instance. The rectifying circuit 9, the capacitor 8, the switch circuit 7, the transmission circuit (transmitter) 6, and the sensor 5 are arranged collectively on a circuit board 50, which is held within the power generating device 10. And the electric power stored in the capacitor 8 is supplied to the sensor 5 and the transmission circuit 6, under the control of the switch circuit 7, and the pressure, temperature, or the like detected by the sensor 5 is transmitted from the transmission circuit 6 to a receiver provided within the vehicle, for instance, via an antenna 52 to be discussed later.

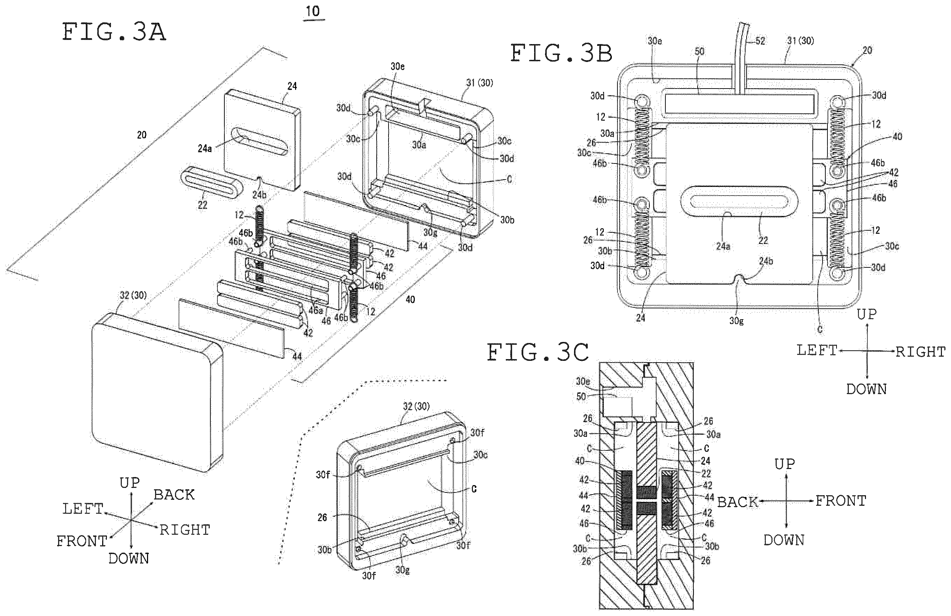

FIG. 3A is an exploded perspective view showing a structure of the power generating device 10. FIG. 3B is a plan view of the power generating device 10. FIG. 3C is a cross-sectional view of the power generating device 10. It is to be noted that the plan view shown in FIG. 3B shows the power generating device 10 with one half member 32 and magnet holders 46 omitted (not shown). Also, the directions shown in the figures are defined such that a movement direction (oscillation direction) of a movable unit 40 shown in the plan view of FIG. 3B is referred to as an up-down direction, and a direction perpendicular to it a left-right direction. Also, a direction perpendicular to an up-down direction shown in the cross-sectional view of FIG. 3C is referred to as a front-back direction.

The power generating device 10 is configured by a fixed unit 20, which is fixed to the inner peripheral surface 2a of the tire 2, and the movable unit 40, which is disposed movably in oscillation, relative to the fixed unit 20, in concert with the rotation of the tire 2. The fixed unit 20 includes a case 30 and a coil holder 24. The case 30, which consists of a combination of a pair of half members 31, 32, is made of a material, such as resin, which is lightweight but has a predetermined rigidity. The half members 31, 32 are each a box with a rectangular shape approximating a square in a planar view which is open on one side. And the openings thereof are put together face to face to form a space for holding the coil holder 24, the circuit board 50, and the movable unit 40. Formed in each of the half members 31, 32 are a motion space C which allows the movement of the movable unit 40 and spring holding spaces 30C.

Attached to each of the upper-end wall 30a and the lower-end wall 30b forming the motion space C within the case 30 are each provided with a cushion material 26 which extends in the left-right direction in a belt-shape. The cushion materials 26 come in contact with the movable unit 40 when the amplitude of up and down oscillation of the movable unit 40 becomes a certain value or more. Thus, the cushion materials 26 not only restrict the oscillation of the movable unit 40 at overamplitude, but also prevent damage to the movable unit 40 by absorbing shocks at their contact with the movable unit 40.

Each of the half members 31, 32 has a pair of spring holding spaces 30c, 30c so formed as to extend in the up-down direction to hold springs 12 on the left and right sides thereof. Provided on the upper and lower sides of each of the spring holding spaces 30c of one of the half members 31 are pins 30d for engaging the springs 12. And provided on the upper and lower sides of each of the spring holding spaces 30c of the other of the half members 32 are pin receiving holes 30f into which the ends of the pins 30d can be inserted. Provided in the center of the left-right direction on the lower wall side of each of the half members 31, 32 are projections 30g for positioning the coil holder 24 in the left-right direction. Formed in the upper part of the half member 31 is a circuit board holding space 30e for holding the circuit board 50.

The coil holder 24, which is a plate-shaped member with a rectangular shape approximating a square in a planar view, is located nearly in the center of the case 30. Provided in the left-right center position on the lower-end surface of the coil holder 24 is a reverse U-shaped positioning recess 24b. The coil holder 24 is positioned in the left-right direction within the case 30 with the projection 30g of the case 30 fitted in the recesses 24b and held by the inner walls of the case 30 from the upper and lower sides and the front and back sides thereof.

Provided in the coil holder 24 is a coil holding part 24a as a through hole penetrating in the front-back direction (plate thickness direction) for holding the conductive coil 22. The coil holding member 24a is shaped in a rectangle with rounded corners extending in the left-right direction. A not-shown friction-reducing film is affixed to each of the front and back surfaces of the coil holder 24 after conductive coil 22 is placed in the coil holder 24. The coil holder 24 is made of a resin, for instance.

The conductive coil 22 is shaped in an external shape identical to that of the coil holding part 24a. The conductive coil 22 has a predetermined number of turns so that the conducting wire extends in the left-right direction when held in the coil holder 24. The winding start end and winding stop end of the conductive coil 22 are electrically coupled to the circuit board 50.

Now, a description is given of the structure of the movable unit 40. The movable unit 40 is structured as a magnetic unit so shaped as to enclose the coil holder 24 spaced apart by a predetermined gap from the coil holder 24. The movable unit 40 has a pair of magnet holders 46, 46 disposed on the front and back sides of the coil holder 24 and magnets 42 and a yoke 44 disposed on each of the magnet holders 46.

The magnet holders 46, 46 are each a plate-shaped member having an external shape of a laterally long rectangle longer than the left-right dimension of the coil holder 24. The magnet holders 46, 46 are disposed at the front surface side and the back surface side of the coil holder 24 so as to extend in the left-right. The magnet holders 46 are made of a resin, for instance, and have magnet holding parts 46a for holding the magnets 42 and joining members 46b for connecting the magnet holders 46 together.

A plurality of magnet holding parts 46a are provided on the upper and lower sides as laterally long rectangle holes penetrating the magnet holder 46 in the front-back direction. The joining members 46b are located in four corners so as to avoid the coil holder 24 positioned in between. For example, the joining members 46b formed on one of the magnet holders 46 are shaped as pin-shaped joining members protruding backward, and the joining members 46b formed on the other of the magnet holders 46 are shaped as cylindrical joining members which will fit around the joining members 46b formed on one of the magnet holders 46. And with the joining members 46b engaged with each other fully in the front-back direction, the magnet holders 46, 46 are joined together with a predetermined distance apart from each other in the front-back direction. As shown in FIG. 3C, when the magnet holders 46, 46 are joined together by means of the joining members 46b, predetermined gaps are provided on the front surface side and the back surface side of the coil holder 24.

The magnets 42 to be held in the magnet holders 46, 46 are neodymium magnets, for instance. The magnets 42, having the same external shape as the magnet holding parts 46a, are fitted into the respective magnet holding parts 46a. The yokes 44 to be held in the magnet holders 46, 46 are each made with a soft iron plate. The yokes 44, having the same external shape as the magnet holders 46, are fixed in predetermined positions to the respective magnet holders 46 by a combination of the attraction by the upper and lower pair of magnets 42 and the use of an adhesive.

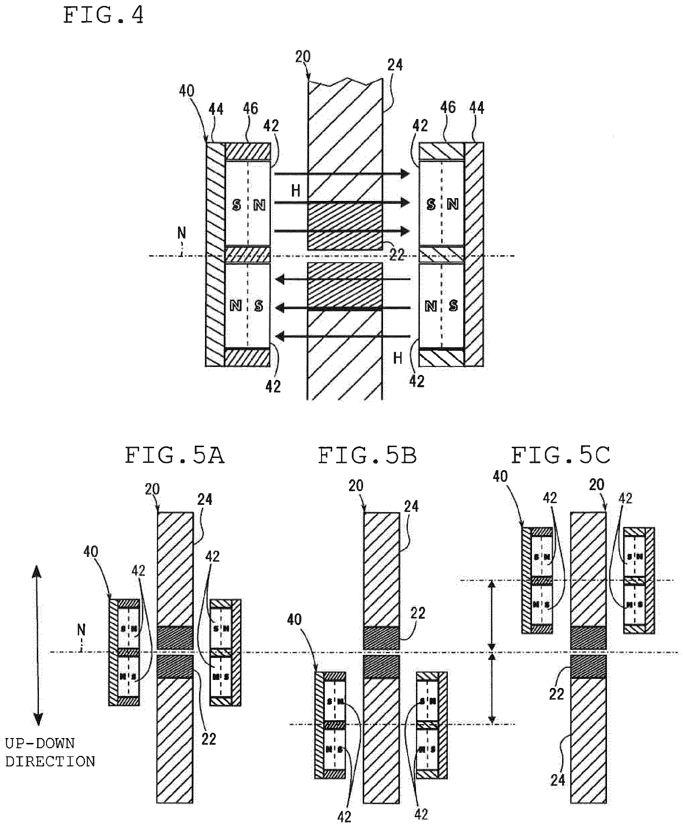

FIG. 4 is an illustration showing a magnetic circuit formed by the magnets 42. As shown in Fig. 4, the magnets 42 are arranged such that polarities of the upper one and the lower one are differentiated to each other on the same surface side of each of the magnet holders 46 and that the magnetic poles of the magnets 42 opposed to each other in the front- back direction have different polarities when the magnet holders 46, 46 are combined together. That is, the upper and lower pair of magnets 42, 42 are arranged such that the magnetic poles thereof have opposite polarity from each other and also opposite polarity between the front and back pair of yokes 44, 44. With the magnets 42 arranged like this, the magnetic circuit causing magnetic flux traversing the space between each set of magnets 42 (indicated by arrows H in FIG. 4) is formed in the movable unit 40.

As shown in FIGS. 3A and 3B, the above-mentioned movable unit 40, which is supported in suspension by a plurality of springs 12 relative to the fixed unit 20, functions as an oscillator. As shown in FIG. 3B, the plurality of springs 12 are disposed spaced apart upside and downside on the left and right sides of the movable unit 40. The plurality of springs 12, which are each a coil spring of the same structure, are arranged to extend and contract in the up-down direction along the left and right pair of spring holding spaces 30c formed in the case 30. It is to be noted that the spring 12 to be employed are compression springs, extension springs, or the like.

The left and right pair of springs 12, 12 positioned on the upper side of the movable unit 40 have the upper ends thereof engaged with the pins 30d formed on the upper part of the case 30 and the lower ends thereof engaged with the joining members 46b on the upper side of the magnet holders 46, 46. Also, the left and right pair of springs 12, 12 positioned on the lower side of the movable unit 40 have the lower ends thereof engaged with the pins 30d formed on the lower part of the case 30 and the upper ends thereof engaged with the joining members 46b on the lower side of the magnet holders 46, 46.

As shown in FIG. 3C and FIG. 4, the magnets 42 of the movable unit 40 supported in suspension by the plurality of springs 12 relative to the fixed unit 20 are set in a positional relationship overlapping with the conductive coil 22 held in the coil holder 24. More specifically, when the power generating device 10 is standing upright on the inner peripheral surface 2a in the ground contact interval E of a stationary tire 2, the coil holding part 24a is formed in the coil holder 24 so that the intermediate position of the magnets 42, 42 disposed upside and downside corresponds to the intermediate position in the up-down direction of the conductive coil 22 held in the coil holder 24. In this setting, the movable unit 40 oscillates with the intermediate position in the up-down direction of the conductive coil 22 as the neutral position N.

FIGS. 5A to 5C are illustrations of the oscillation of the movable unit 40 to achieve the maximum amount of power generation. As shown in 5A to 5C, the maximum amount of power generation can be achieved by moving the upper and lower magnets 42, 42 set in the movable unit 40 from the neutral position N shown in FIG. 5A to the outer (lower) area in the tire radial direction, where the magnets 42, 42 are not overlapped with the conductive coil 22, shown in FIG. 5B and then to the inner (upper) area in the tire radial direction, where the magnets 42, 42 are not overlapped with the conductive coil 22, shown in FIG. 5C. In this manner, the electromotive force to be induced in the conductive coil 22 can be increased as the movable unit 40 is allowed to oscillate widely.

And the amplitude of the movable unit 40 can be maximized by matching the natural frequency, which is determined by the composite spring characteristic k of the four springs supporting the movable unit 40 in suspension and the mass M of the movable unit 40, which is called the resonance frequency f1, to the frequency fz corresponding to the change in acceleration acting on the inner peripheral surface 2a of the tire 2 rotating at a specific running speed.

Hereinbelow, a description is given of an example of maximizing the amplitude of the movable unit 40 when the power generating device 10 is attached to the axial middle position on the back side of the tread on the inner peripheral surface 2a of the tire 2. Thus, the oscillation direction of the movable unit 40 is in the tire radial direction. It is to be noted here that the oscillation direction of the movable unit 40 being in the tire radial direction is not limited to the direction exactly in parallel with the radial direction, but may include the directions inclined with respect to the tire radial direction. Also, in the following description, the rotation speed of the tire contributing to the power generation is assumed to be a specific constant speed at which a vehicle fitted with a tire 2 is traveling.

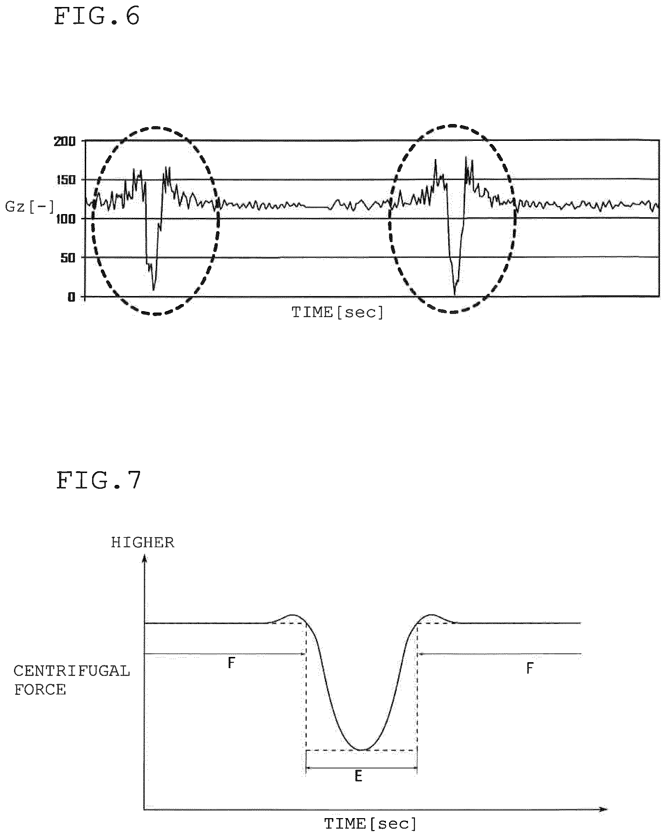

FIG. 6 shows a time-series variation waveform chart showing changes in acceleration Gz in the tire radial direction occurring at the inner peripheral surface 2a of the tire 2 rotating at a specific constant speed. As shown in FIG. 6, the acceleration Gz in the tire radial direction caused by the centrifugal force acts on the inner peripheral surface 2a of the tire 2 rotating in contact with the road surface 4. Also, the acceleration Gz, which changes markedly up and down in the portions encircled by a broken line, changes under the influence of the contact of the tire 2 with the road surface 4.

FIG. 7 is a diagram showing changes in centrifugal force before and after the contact of the tire 2 with the ground. As shown in FIG. 7, the centrifugal force is acting on the inner peripheral surface 2a of the tire 2 in the non-ground-contact interval F, in which the movable unit 40, pressured toward radially outside of the neutral position N, cannot oscillate. On the other hand, in the ground contact interval E, where the tire 2 can be assumed to be in a constant-speed linear motion along the road surface 4, it is considered that the centrifugal force does not work theoretically and thus changes in the pulse shape as indicated by the broken line.

That is, if we place a focus point on the inner peripheral surface 2a of the tire 2 and consider the motion at this focus point rotating at a constant speed, then it can be assumed that the focus point in every tire revolution is in a circular motion around the central axis of tire rotation in the non-ground-contact interval F and in a linear motion in the ground contact interval E.

However, the actual tire 2 undergoes smooth deformation from the leading side non-ground-contact interval F to the ground contact interval and from the ground contact interval to the trailing side non-ground-contact interval F, and therefore the centrifugal force does not change in the pulse shape as indicated by the broken line but changes such as to be the greatest before and after the ground contact and the least in the center of the ground contact surface as indicated by the solid line in FIG. 7.

And it is possible to achieve effective power generation by causing oscillation of the movable unit 40 using the timing of change (fall or rise) of centrifugal force and inducing the oscillation of the movable unit 40 along the waveform of the frequency for the change (fall or rise) of the centrifugal force.

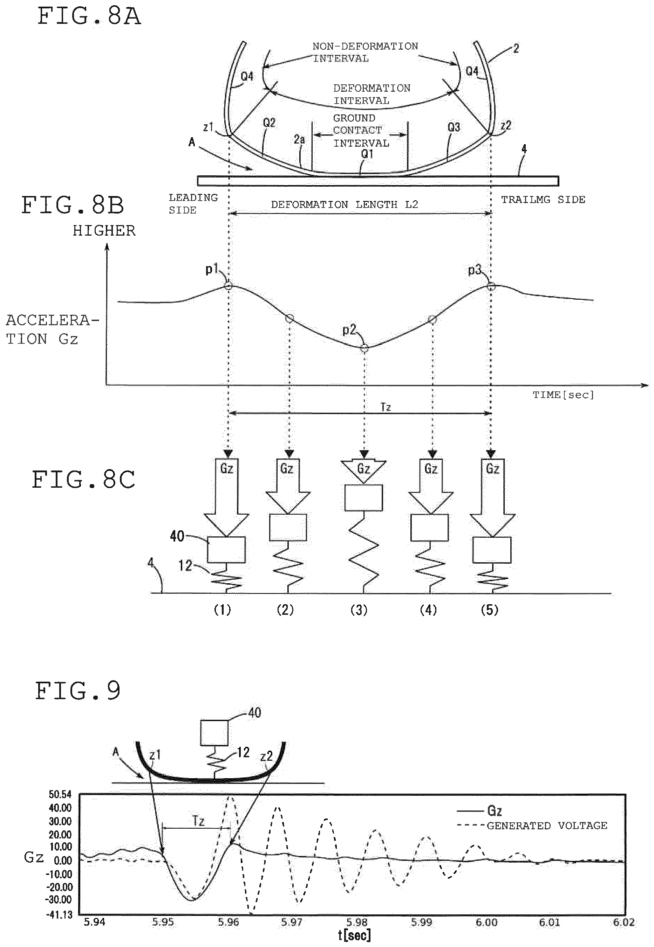

FIG. 8A is an illustration showing an exaggerated shape of a tire deformed in contact with the ground. FIG. 8B is a diagram showing the time variation of the centrifugal force (acceleration Gz) acting on the inner peripheral surface 2a of the tire 2 deformed in contact with the ground. FIG. 8C is a model illustration showing the oscillation of the movable unit 40 when the oscillation is maximized.

As shown in FIG. 8A, the tire 2 during rotation is deformed in arcs with greater curvature than that set for the tire 2 near the ground contact area (Q2, Q3). More specifically, the tire 2 is deformed such that it has the ground contact deformation area Q1 where the tire is deformed in direct contact with the road surface 4, the leading side deformation area Q2 and the trailing side deformation area Q3 where the tire is deformed in greater curvature than the predetermined curvature set for the tire 2 before and after the ground contact deformation area Q1, and the non-deformation area Q4 where no deformation is assumed. The leading side deformation area Q2 and the trailing side deformation area Q3 of the tire 2 are so deformed to smoothly connect to the ground contact deformation area Q1 with flat deformation and the non-deformation area Q4. It is to be noted that in the following description, the area including the ground contact deformation area Q1, the leading side deformation area Q2 and the trailing side deformation area Q3 are referred to as the deformation interval, and the non-deformation area Q4 as the non-deformation interval.

As shown in FIG. 8B, in the non-deformation interval, a nearly constant acceleration Gz acts on the inner peripheral surface 2a of the tire 2 by the centrifugal force caused by the above-mentioned circular motion. On the other hand, in the deformation interval, the shape of the tire 2 gets deformed by the contact thereof with the road surface 4, and as a result, there occurs a change in centrifugal force acting on the inner peripheral surface 2a. In the non-deformation interval, the centrifugal force acting on the inner peripheral surface 2a can be assumed to be generally constant. On the other hand, however, the centrifugal force increases gradually as the position approaches the deformation interval from the non-deformation interval, reaches a maximum at the point where the non-deformation interval connects to the deformation interval, then decreases to a minimum in the center of the ground contact interval, returns to a maximum again at the point where the deformation interval connects to the non-deformation interval, and decreases gradually to be constant as the position moves away from the deformation interval.

In other words, the centrifugal force acting on the tire rotating at a constant speed changes such that it has the leading side peak p1, where it maximizes at the deformation start end zl of the deformation interval, the minimum value peak p2, where it minimizes at the center of the deformation interval, and the trailing side peak p3, where it maximizes again at the deformation end z2, during one revolution of the tire.

And, in order to maximize the amount of power generation by the power generating device 10, it is so arranged as to synchronize the oscillation of the movable unit 40 with the above-described changes in centrifugal force. To be more specific, it may be so arranged that, as shown in FIG. 8C, the movable unit 40 oscillates in a cycle along with the changes in centrifugal force as follows: (1) the movable unit 40 moves to the radially outermost position at the leading side peak p1, (2) the movable unit 40 moves radially inward under the reduced centrifugal force and the elastomeric force of the springs 12, (3) the movable unit 40 moves to the radially innermost position at the minimum-value peak p2, (4) the movable unit 40 moves radially outward under the increased centrifugal force and the elastomeric force of the springs 12, and (5) the movable unit 40 moves to the radially outermost position at the trailing side peak p3.

That is, it is possible to have the movable unit 40 resonate with the rotation of the tire 2 by setting the composite spring characteristic k of the four springs 12 and the mass M of the movable unit 40 such that the predetermined inter-peak time between the leading side peak p1 and the trailing side peak p3 in a single revolution of the tire 2 rotating at a constant speed is matched to the resonance frequency of the movable unit 40, which is determined by the composite spring characteristic k and the mass M of the movable unit 40. In other words, the arrangement may be such that the composite spring characteristic k and the mass M of the movable unit 40 are so set as to match the resonance frequency f1 of the movable unit 40 to the frequency corresponding to the changes in centrifugal force. This is the same as achieving a match between the time of the power generating device 10 traversing the deformation length L2 shown in FIG. 8A and the resonance period T1 of the movable unit 40 or achieving a match between the deformation length L2 and the wave length $\lambda$1 of the resonance frequency f1 of the movable unit 40.

The resonance frequency f1 having the resonance period of the movable unit 40 like this can be calculated from the relationship $(1/2\pi)\sqrt{(k/M)}$ between the mass M of the movable unit 40 and the composite spring characteristic k of the four springs 12. It is to be noted that in our calculation we considered the mass of the springs 12 to be ignorable.

The movable unit 40 can be resonated with the rotation of the tire 2 by matching the resonance period of the resonance frequency f1 of the movable unit 40 to the transit time $\Delta$t by which the power generating device 10 rotating at a constant speed transits the deformation length L2 (deformation interval). For example, the composite spring characteristic k and the mass M of the movable unit 40 may be set such that the resonance period of the resonance frequency f1 matches to the inter-peak time Tz in which the acceleration Gz changes. This will maximize the amplitude of the up-and-down oscillation and the up-and-down movement speed of the movable unit 40, thus maximizing the mechanical oscillation energy available.

The inter-peak time Tz shown in FIG. 8B corresponds to one period (cycle) of the centrifugal force acting on the magnets 42 (movable unit 40) . Hence, the frequency fz = 1/Tz can be calculated by the use of the inverse of the inter-peak time Tz (period). Therefore, the amount of generated power reaches a maximum when the frequency fz of the rotating tire 2 is equal to the resonance frequency f1 of the movable unit 40. This frequency fz can be replaced by the rotation speed of the tire 2. In this manner, the variation time of the centrifugal force caused by the rotation of the tire 2 may be matched to the phase of displacement velocity in the oscillation of the movable unit 40 to smoothly continue the oscillation of the movable unit 40. It is to be noted that the oscillation of the movable unit 40 induced as described above is slowly damped due to the energy conversion of power generation, the loss from friction, and so on.

FIG. 9 is a diagram showing a change in generated voltage when the movable unit 40 is oscillated in resonance. As shown in FIG. 9, the movable unit 40 of the power generating device 10 oscillates in resonance in association with ground contact of the tire, and therefore power generation follows the changes in acceleration Gz. Also, in the non-deformation interval, where there is little change in acceleration Gz caused by centrifugal force, it can be seen that the power generation continues despite the damping oscillation of the movable unit 40. Therefore, a large amount of power generation can be achieved by widening the amplitude of the movable unit 40 resonating with the rotation of the tire 2. That is, the amount of power generation can be increased because the variation and the variation rate of magnetic flux of the magnetic circuit formed by the plurality of magnets 42 of the movable unit 40 penetrating the conductive coil 22 can be maximized.

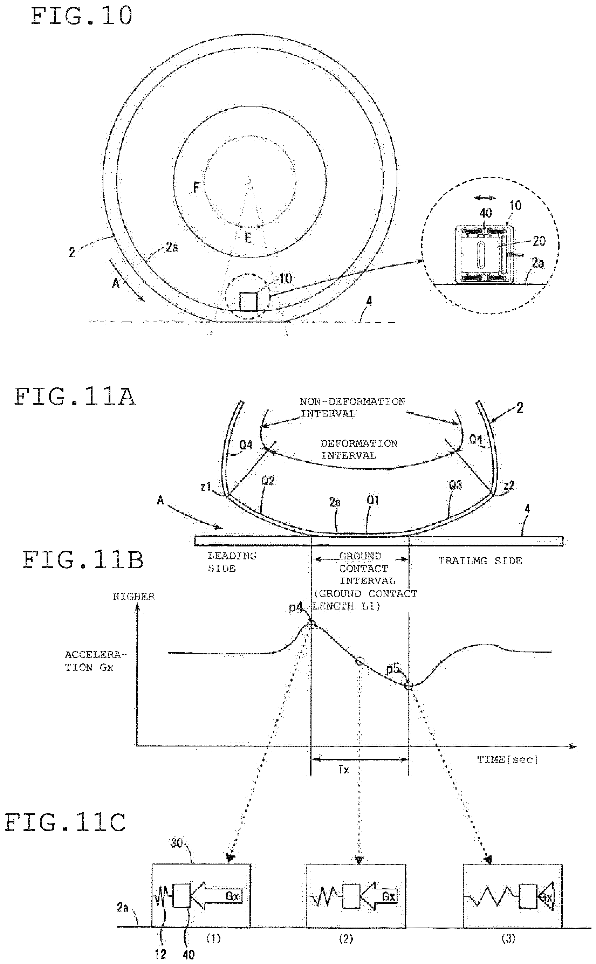

In the exemplary embodiment described so far, a description has been given of an implementation in which the power generating device 10 is installed such that the movable unit 40 thereof oscillates in the direction along the centrifugal force acting on the inner peripheral surface 2a. FIG. 10 is an illustration showing an implementation in which the power generating device 10 is so installed that the movable unit 40 thereof oscillates in the direction along the circumferential direction of the inner peripheral surface 2a. Hereinbelow, a description is given of the mechanism of power generation by the power generating device 10 according to this embodiment. It is to be noted that the movable unit 40 oscillating in the direction along the circumferential direction of the inner peripheral surface 2a with the power generating device 10 mounted on the inner peripheral surface 2a means the movable unit 40 oscillating in the direction tangent to the circumference of the inner peripheral surface 2a, not exactly along the circumferential direction thereof. And the direction of oscillation includes those inclined from the tangential direction. In the following description, therefore, the term "tangential direction" is used instead of "circumferential direction".

FIG. 11A is an illustration showing a shape of a tire deformed in contact with the ground. FIG. 11B is a diagram showing the time variation of the acceleration Gx occurring in the tangential direction of the inner peripheral surface 2a of the tire 2 deformed in contact with the ground. FIG. 11C is a model illustration showing the oscillation of the movable unit 40 when the oscillation is maximized. Frictional forces work on the rotating tire 2 as it comes in contact with the road surface 4. The frictional forces give rise to the acceleration Gx which decelerates the tire rotation on the leading side and the acceleration Gx which accelerates the tire rotation on the trailing side. Accordingly, as shown in FIG. 11B, the acceleration Gx acting on the power generating device 10 have peaks of opposite signs at the leading end and the trailing end of the ground contact surface. Hereinbelow, the peak on the leading side where the acceleration on the positive value side reaches a maximum is referred to as leading side peak p4, and the peak on the trailing side where the acceleration on the negative value side reaches a maximum as trailing side peak p5. The change in the acceleration Gx between the leading side peak p4 and the trailing side peak p5 can be considered to correspond to a half cycle of one cycle of the frequency having a certain wavelength. Hence, the movable unit 40 can be resonated by matching the half cycle of the resonance period to the time from the leading side peak p4 to the trailing side peak p5.

To be more specific, it should be so arranged that, as shown in FIG. 11C, the movable unit 40 oscillates in a cycle as follows: (1) the movable unit 40 moves farthest to the leading side in the tire tangential direction at the leading side peak p4 of the acceleration Gx, (2) the movable unit 40 moves toward the trailing side in the tire tangential direction under the reduced acceleration Gx and the elastomeric force of the springs 12, and (3) the movable unit 40 moves farthest to the trailing side in the tire tangential direction at the trailing side peak p5 of the acceleration Gx.

The inter-peak time Tx between the leading side peak p4 and the trailing side peak p5 shown in FIG. 11B corresponds to a half cycle of resonation of the movable unit 40. Hence, the frequency $fx = 1/(2Tx)$ can be calculated by the use of the inverse of the inter-peak time Tx. It is to be noted that since the inter-peak time Tx of this embodiment is a half cycle, it is doubled for correction to one cycle (period). This frequency fx can be replaced by the rotation speed of the tire 2. Hence, the amount of power generation reaches a maximum when the frequency fx of the rotation of the tire 2 is equal to the resonance frequency f2 of the movable unit 40.

Also, in order to increase the amount of power generation by the rotation speed of the tire 2, both the above-described power generating device 10 so arranged that the movable unit 40 oscillates along the tire radial direction and the power generating device 10 according to this embodiment so arranged as to oscillate along the tire tangential direction may be provided on the inner peripheral surface 2a.

Also, the power generating device 10 may be arranged such that a movable unit (radial direction unit) oscillating along the tire radial direction and a conductive coil coupled to it and a movable unit (tangential direction unit) oscillating along the tire tangential direction and a conductive coil coupled to it are both provided within one power generating device 10 and thus the radial direction unit and the tangential direction unit resonate at the frequencies corresponding to the changes in acceleration in the respective directions during one revolution of the tire rotating at a constant speed.

Also, in each of the foregoing embodiments, a description has been given of the power generating device 10 installed on the inner peripheral surface 2a at the axial center of the tire so that the movable unit 40 oscillates in the tire radial direction or the tire tangential direction, but this is not a limiting condition. The inner peripheral surface 2a of the tire 2, when designed, is shaped as a three-dimensionally curved surface having predetermined curvatures in the tire axial direction and the tire circumferential direction. The inner peripheral surface 2a formed into a three-dimensionally curved surface like this deforms to stretch in the radial, axial, and circumferential directions of the tire as the tire 2 comes in contact with the road surface 4, and thus forces work in the respective directions. That is, accelerations occur in the respective directions.

Therefore, it may be so arranged that the power generating device 10 is installed with the oscillation direction of the movable unit 40 adjusted to the direction producing greater changes in acceleration at given positions on the inner peripheral surface 2a of the tire 2 and with the resonance frequency of the movable unit 40 set in agreement with the period between the leading side peak and the trailing side peak of the acceleration.

For example, the tire 2 in contact with the road surface deforms to have the sides thereof bulging in the tire axial direction and is thus subject mainly to the acceleration Gy in the axial direction. Hence, the power generating device 10 may be installed on the side region of the inner peripheral surface 2a such that the oscillation direction of the movable unit 40 is along the tire axial direction. In this case, power generation can be performed effectively by matching the resonance period of the movable unit 40 to the inter-peak period Ty between the leading side peak and the trailing side peak.

Also, with the power generating device 10 thus far described, the arrangement has been such that the conductive coil 22 is fixed and the magnets 42, functioning as the oscillator, are oscillated relative to the conductive coil 22. However, the arrangement may be such that the magnets 42 are fixed and the conductive coil 22 is oscillated relative to the fixed magnets 42. That is, the conductive coil 22 functions as the oscillator. In this case, the same positional relationship of the conductive coil 22 surrounded by the magnets 42 may be used as it is to obtain the same amount of power generation as that of the foregoing power generating device 10.

The power generating devices as described thus far may be fitted to the tire to improve the power generation efficiency of the power generating device and obtain greater amount of power generation than that of the known art.

The power generating device according to a preferred embodiment is a power generating device which is to be mounted on an interior surface of a tire and which includes an oscillator that oscillates by rotation of the tire during vehicular travel to produce electromotive force, in which a resonance frequency of the oscillator is matched to a frequency corresponding to a change in acceleration at an interior surface of the tire during one revolution of the tire rotating at constant speed.

According to this arrangement, the power generation efficiency can be improved. That is, the oscillator is resonated by matching a resonance frequency of the oscillator to a frequency corresponding to a change in acceleration at the interior surface of the tire during one revolution of the tire rotating at a constant speed. And the electromotive force increased by widening an amplitude of the oscillator will improve a power generation efficiency.

Also, the power generation efficiency may be surely improved by employing the acceleration in a radial direction of the tire and calculating the frequency corresponding to the change in acceleration based on an inter-peak time between a leading side peak and a trailing side peak appearing in a time-series variation waveform of acceleration in the radial direction of the tire.

Also, the power generation efficiency may be surely improved by employing the acceleration in a circumferential direction of the tire for the acceleration at the tire inner surface and calculating the frequency corresponding to the change in acceleration based on twice the inter-peak time between the leading side peak and the trailing side peak appearing in a time-series variation waveform of acceleration in the tire circumferential direction.

Also, the power generating device may be equipped with a plurality of oscillators. And the power generation efficiency may be further improved by matching the resonance frequency of some of the oscillators to the frequency corresponding to a change in acceleration in the tire radial direction at the interior surface of the tire during one revolution of the tire rotating at a constant speed and matching the resonance frequency of the other oscillators to the frequency corresponding to a change in acceleration in the tire circumferential direction at the interior surface of the tire during one revolution of the tire rotating at the constant speed.

Also, a tire equipped with the power generating device as described above can improve the power generation efficiency and achieve an amount of power generation greater than that of the known art.

Description of Reference Numerals

| 2 | tire |
|---|---|
| 2a | inner peripheral surface |
| 4 | road surface |
| 10 | power generating device |
| 12 | spring |
| 20 | fixed unit |
| 22 | conductive coil |
| 24 | coil holder |
| 24a | coil holding part |
| 24b | positioning recess |
| 24c | notch |
| 26 | cushion member |
| 30 | case |

| 31, 32 | half member |
|---|---|
| 30a | upper end wall |
| 30b | lower end wall |
| 30c | spring holding space |
| 30d | pin |
| 30e | circuit board holding space |
| 40 | movable unit |
| 42 | magnet |
| 44 | yoke |
| 46 | magnet holder |
| 50 | circuit board |
| 52 | cord |
| C | motion space |

**Claims**

1. A power generating device, which is to be mounted on an interior surface of a tire, comprising:

   an oscillator that oscillates by rotation of the tire during vehicular travel to produce electromotive force,
   wherein a resonance frequency of the oscillator is matched to a frequency corresponding to a change in acceleration at an interior surface of the tire during one revolution of the tire rotating at a constant speed.

2. A power generating device according to claim 1, wherein the acceleration is an acceleration in a radial direction of the tire.

3. A power generating device according to claim 1 or claim 2, wherein the frequency corresponding to the change in acceleration is calculated based on an inter-peak time between a leading side peak and a trailing side peak appearing in a time-series variation waveform of acceleration in the radial direction of the tire.

4. A power generating device according to claim 1, wherein the acceleration is acceleration in a circumferential direction of the tire.

5. A power generating device according to claim 4, wherein the frequency corresponding to the change in acceleration is calculated based on twice an inter-peak time between a leading side peak and a trailing side peak appearing in a time-series variation waveform of acceleration in the circumferential direction of the tire.

6. A power generating device comprising:

   a plurality of oscillators,
   wherein a resonance frequency of some of the oscillators is matched to a frequency corresponding to a change in acceleration in a tire radial direction at an interior surface of the tire during one revolution of the tire rotating at a constant speed and
   wherein the resonance frequency of the others of the oscillators is matched to a frequency corresponding to a change in acceleration in a tire circumferential direction at the interior surface of the tire during one revolution of the tire rotating at the constant speed.

7. A tire including the power generating device according to claim 1.

FIG.1

FIG.2

FIG.3A

10

FIG.3B

FIG.3C

UP

BACK

LEFT ← → RIGHT

FRONT

DOWN

UP

LEFT ← → RIGHT

DOWN

UP

BACK ← → FRONT

DOWN

EP 3 389 171 A1

FIG.4

FIG.5A          FIG.5B          FIG.5C

UP-DOWN
DIRECTION

FIG.6

FIG.7

## FIG.8A

## FIG.8B

## FIG.8C

## FIG.9

FIG.10

FIG.11A

NON-DEFORMATION
INTERVAL

DEFORMATION
INTERVAL

FIG.11B

LEADING
SIDE

GROUND
CONTACT
INTERVAL
(GROUND CONTACT
LENGTH L1)

TRAILMG SIDE

HIGHER

ACCELERA-
TION Gx

p4

p5

Tx

TIME[sec]

FIG.11C

30

2a

12  40

(1)          (2)          (3)

## INTERNATIONAL SEARCH REPORT

| International application No. |
| --- |
| PCT/JP2016/084508 |

**A. CLASSIFICATION OF SUBJECT MATTER**
*H02K35/02*(2006.01)i, *H02K35/04*(2006.01)i, *H02N1/00*(2006.01)i, *H02N2/18*
(2006.01)i

According to International Patent Classification (IPC) or to both national classification and IPC

**B. FIELDS SEARCHED**

Minimum documentation searched (classification system followed by classification symbols)
H02K35/02, H02K35/04, H02N1/00, H02N2/18

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2012-23839 A (Bridgestone Corp.),<br>02 February 2012 (02.02.2012),<br>paragraphs [0014], [0019] to [0020], [0025];<br>fig. 2 to 5<br>(Family: none) | 1-2,4,6-7<br>3,5 |

☐ Further documents are listed in the continuation of Box C.       ☐ See patent family annex.

| | |
| --- | --- |
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    21 December 2016 (21.12.16) | Date of mailing of the international search report<br>    10 January 2017 (10.01.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**EP 3 389 171 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015047003 A